# EUROPÄISCHE PATENTSCHRIFT

(11) **EP 1 413 475 B1**
(45) Veröffentlichungstag und Bekanntmachung des Hinweises auf die Patenterteilung: **22.02.2017**
(21) Anmeldenummer: 03090321.5
(22) Anmeldetag: 29.09.2003
(51) Int. Cl.: B60N 2/68

(54) **Gewichtsoptimierte Rückenlehne für einen Kraftfahrzeugsitz**
Backrest optimised in weight for a motor vehicle seat
Dossier optimisé en poids pour un siège de véhicule automobile

(30) Priorität: 23.10.2002 DE 10250218
(43) Veröffentlichungstag der Anmeldung: 28.04.2004
(73) Patentinhaber: Volkswagen Aktiengesellschaft, 38440 Wolfsburg (DE)
(72) Erfinder: Kirchhoff, Heiko, 38444 Wolfsburg (DE); Coester, Wilhelm, 38440 Wolfsburg (DE)
(74) Vertreter: Gulde & Partner

(56) Entgegenhaltungen:
- EP-A- 1 186 469
- DE-A1- 10 022 984
- DE-A1- 10 142 981
- FR-A1- 2 786 447

## Beschreibung

Die Erfindung betrifft eine gewichtsoptimierte Rückenlehne für einen Kraftfahrzeugsitz mit den im Oberbegriff des Anspruchs 1 genannten Merkmalen.

Rückenlehnen der gattungsgemäßen Art sind bekannt. Die angesprochenen Rückenlehnen werden insbesondere als Rückenlehnen für so genannte Rücksitzbänke eingesetzt. Diese umfassen ein Sitzelement und eine Rückenlehne. Die Rückenlehne ist je nach konkreter konstruktiver Gestaltung geteilt ausgebildet und zur Vergrößerung eines Laderaumes des Kraftfahrzeuges umklappbar angeordnet. Bekannt ist hier eine 1/3-zu-2/3-Teilung der Rückenlehne. In Betriebsposition der Rückenlehne ist diese über wenigstens einen Befestigungspunkt im Wesentlichen starr mit einer Kraftfahrzeugkarosserie verbunden. Hierzu sind lösbare Rastverbindungen, Schnappverbindungen oder dergleichen bekannt.

Zur Gewährleistung einer Fahrzeuginsassensicherheit müssen die Rückenlehnen eine Mindest-Steifigkeit aufweisen. Insbesondere bei Frontalaufprall des Kraftfahrzeuges wirken auf die Rückenlehne erhebliche, in Fahrtrichtung gerichtete Kräfte. Vor allem, wenn in die Rückenlehne integrierte Sicherheitsgurte vorgesehen sind, greifen an der Rückenlehnenoberkante erhebliche Gurtkräfte an. Um eine Insassensicherheit zu gewährleisten, darf die Rückenlehne nach geltenden Vorschriften nur bis zu einem bestimmten Betrag, der zwischen 300 und 400 mm liegt, in Fahrtrichtung deformiert werden. Dies ist zur Aufrechterhaltung eines so genannten Überlebensraumes für die Fahrzeuginsassen notwendig.

Um die notwendige Festigkeit der Rückenlehnen zu erreichen, ist bekannt, einen als Träger dienenden Grundkörper der Rückenlehne beispielsweise aus einem verstärkten Stahlblech zu fertigen. Zur weiteren Erhöhung der möglichen Kraftaufnahme der Rückenlehne ist es weiterhin bekannt, Versteifungen innerhalb des Grundkörpers anzuordnen, damit die Kräfte vom Grundkörper und den zusätzlichen Versteifungselementen aufgenommen werden können.

Hierbei ist nachteilig, dass dieser Grundkörper ein relativ hohes Gewicht besitzt, das den Bemühungen, insbesondere eine Einsparung an Kraftstoff durch eine Gewichtsreduzierung des Kraftfahrzeuges zu erzielen, entgegensteht.

Nachteilig ist zudem, dass die Versteifungen Durchlademöglichkeiten durch die Rückenlehne versperren, so dass eine temporäre Vergrößerung des Laderaumvolumens zum Beispiel für längere Ladegüter, wie Ski und Snowboards oder dergleichen, nicht möglich ist.

Als Stand der Technik werden die Druckschriften DE 100 22 984 A1, EP 1 186 469 A2, FR 2 786 447 B1 sowie DE 101 42 981 A1 und die US 5 685 612 A genannt.

Die Druckschrift DE 101 42 981 A1 offenbart bereits einen Lehnenpolsterträger für eine Kraftfahrzeug-Rücksitzbank, mit einem Grundblech und wenigstens einem mit dem Grundblech fest verbundenen, wenigstens teilweise umlaufenden Verstärkungsrahmen, der modular aufgebaut ist. Der Verstärkungsrahmen entsteht aus einer Ausgangsform, welche mit wenigstens einem zusätzlichen Verstärkungselement verbindbar ist.

Die Druckschrift US 5 685 612 (entsprechend dem Oberbegriff des Anspruchs 1) offenbart eine Rückenlehne für einen Kraftfahrzeugsitz,
wobei die Rückenlehne einen Grundkörper umfasst, der über wenigstens einen Befestigungspunkt starr mit einer Kraftfahrzeugkarosserie verbindbar ist, wobei der Grundkörper ein flächiges Element und mindestens eine mit dem Grundkörper verbundene Versteifungsstruktur umfasst, wobei die Versteifungsstruktur einen Versteifungsrahmen und mindestens ein zwischen den Rahmenelementen des Versteifungsrahmens angeordnetes Versteifungselement aufweist. Die Versteifungsstruktur ist aus Vollprofilmaterial ausgebildet und somit relativ schwer.

Die Druckschrift FR 2 786 447 B1 erläutert eine rahmenförmige Versteifungsstruktur mit Versteifungselementen, die aus u-förmigen Profilen ausgebildet ist.

Ausgehend von diesem Stand der Technik liegt der Erfindung die Aufgabe zugrunde, eine Rückenlehne der gattungsgemäßen Art zu schaffen, die eine hohe Festigkeit und ein geringes Gewicht aufweist und in der Bereiche ausbildbar sind, in denen zusätzliche Durchlademöglichkeiten angeordnet werden können.

Erfindungsgemäß wird diese Aufgabe durch eine Rückenlehne mit den im Anspruch 1 genannten Merkmalen gelöst.

Ausgangspunkt der Erfindung ist eine Rückenlehne für einen Kraftfahrzeugsitz, wobei die Rückenlehne einen Grundkörper umfasst, der über wenigstens einen Befestigungspunkt starr mit einer Kraftfahrzeugkarosserie verbindbar ist, wobei der Grundkörper ein im Wesentlichen flächiges Element und mindestens eine mit dem Grundkörper verbundene Versteifungsstruktur umfasst, wobei die Versteifungsstruktur einen Versteifungsrahmen und mindestens ein zwischen den Rahmenelementen des Versteifungsrahmens angeordnetes Versteifungselement aufweist.

Erfindungsgemäß ist vorgesehen, dass die Elemente des Versteifungsrahmens aus Hohl-Profilen und das mindestens eine Versteifungselement aus einem U-Profil gebildet ist, wobei der Versteifungsrahmen und das mindestens eine Versteifungselement mit dem flächigen Element verklebt und/oder durch thermische Einwirkung verbunden ist.

In bevorzugter Ausgestaltung der Erfindung ist vorgesehen, dass das mindestens eine Versteifungselement im Innern des Versteifungsrahmens angeordnet ist. Das Versteifungselement umfasst ferner in bevorzugter Ausführung ein vertikales Versteifungselement und ein horizontales Versteifungselement.

Erfindungsgemäß umfasst der Versteifungsrahmen ein erstes und zweites horizontales Rahmenelement und ein erstes und zweites vertikales Rahmenelement. Das vertikale Versteifungselement ist zwischen dem ersten horizontalen Rahmenelement und dem zweiten horizontalen Rahmenelement angeordnet.

In besonderer Ausgestaltung der Erfindung ist das horizontale Versteifungselement zwischen dem vertikalen Versteifungselement und dem zweiten horizontalen Rahmenelement angeordnet. Durch die Form der Versteifungselemente, dem vertikalen und dem horizontalen Versteifungselement, ergibt sich die extrem hohe Festigkeit der Versteifungsstruktur in Verbindung mit einem geringen Gewicht, und zudem besteht erfindungsgemäß die Möglichkeit, an der von den Versteifungselementen nicht beanspruchten Fläche in dem flächigen Element eine Öffnung anzuordnen. In vorteilhafter Weise kann diese Öffnung zum Durchladen von sperrigen Ladegütern verwendet werden.

Bevorzugt ist zudem, dass der Versteifungsrahmen und die Versteifungselemente von im Querschnitt betrachtet rohrförmigen, u-förmigen oder Hohl-Profilen ausbildbar sind. Die Versteifungselemente sind dabei zudem im Bereich von mechanisch besonders hoch belastbaren Bereichen des Versteifungsrahmens anordbar.

Erfindungsgemäß ist ferner, dass die Elemente des Grundkörpers - das flächige Element, das erste und zweite horizontale Rahmenelement, das erste und zweite vertikale Rahmenelement und das vertikale und das horizontale Versteifungselement - aus Leichtbaumaterialien herstellbar sind und zudem stellen- und bereichsweise verschiedene Materialstärken aufweisen.

Ein Vorteil der Erfindung besteht darin, dass durch die Verbindung der Versteifungsstruktur in der Form eines auf dem Kopf stehenden "Y" der Versteifungselemente und/oder des Verbindungsrahmens mit dem flächigen Element in besonders einfacher Weise eine hohe Festigkeit des Grundkörpers entsteht.

Dabei enden ferner in vorteilhafter Weise die "Y"-förmig angeordneten, stegförmigen Versteifungselemente an mechanisch hoch beanspruchbaren Stellen des Versteifungsrahmens.

Hierdurch wird ein unter dem Gesichtspunkt einer notwendigen Festigkeit und der Gewichtsreduzierung optimaler Aufbau des Grundkörpers der Rückenlehne möglich. Insbesondere, wenn eine Materialstärke der stegförmigen Verstärkungselemente bereichsweise unterschiedlich gewählt ist, kann die notwendige Festigkeit mit einer maximalen Gewichtsreduzierung verknüpft werden.

Die Erfindung wird nachfolgend in einem Ausführungsbeispiel anhand der zugehörigen Zeichnungen näher erläutert. Es zeigen:
- Figur 1: eine schematische Draufsicht auf einen Grundkörper einer Rückenlehne und
- Figur 2: einen Schnitt A-A durch den Grundkörper einer Rückenlehne.

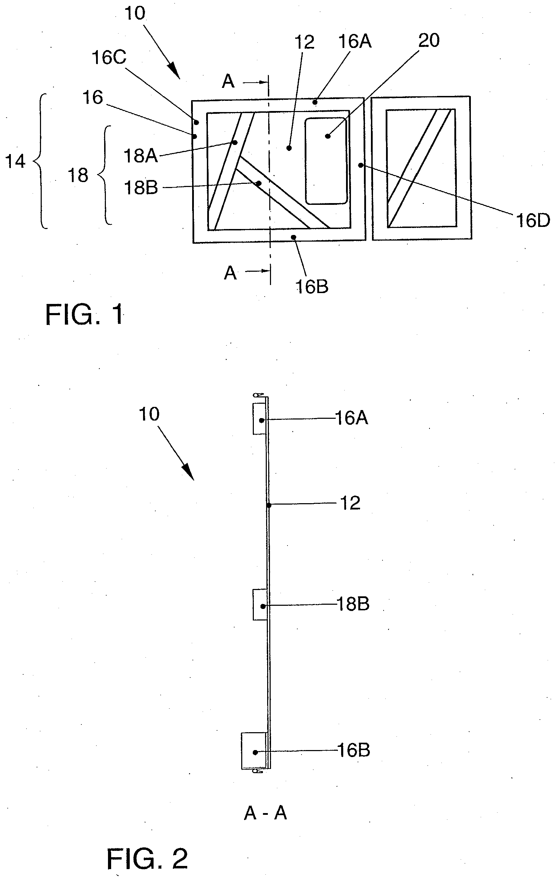

Figur 1 zeigt eine Draufsicht auf einen insgesamt mit 10 bezeichneten Grundkörper einer Rückenlehne eines Kraftfahrzeuges. Der in Figur 1 gezeigte Grundkörper 10 ist der 2/3-Teil eine Rücksitzlehne. Es ist klar, dass sich der Aufbau des Grundkörpers 10 selbstverständlich auch auf einen 1/3-Teil beziehungsweise auf eine komplette Rücksitzlehne in vollkommen analoger Form übertragen lässt.

Der Grundkörper 10 umfasst ein flächiges Element 12, dessen Versteifungsstruktur 14 den konstruktiven Gegebenheiten im Kraftfahrzeug angepasst ist.

Das flächige Element 12 dient als Trägerelement für eine hier nicht weiter dargestellte Rückenlehne.

Auf der in Figur 1 sichtbaren Fläche des Grundkörpers 10 ist eine mit insgesamt 14 bezeichnete Versteifungsstruktur angeordnet. Die Versteifungsstruktur 14 ist hierbei vorzugsweise auf der dem Kraftfahrzeuginnenraum zugewandten Seite des Grundkörpers 10 angeordnet. Bei einer kompletten Rückenlehne ist die Versteifungsstruktur 14 durch eine Polsterung abgedeckt und somit nicht sichtbar.

Die Versteifungsstruktur 14 besteht aus einem Versteifungsrahmen 16, der die Ränder des flächigen Elementes 12 aufnimmt, und einem Versteifungselement 18. Das Versteifungselement 18 bildet durch sein vertikales Versteifungselement 18A und sein horizontales Versteifungselement 18B ein auf dem Kopf stehendes "Y" aus.

Das Versteifungselement 18 ist im Innern des Versteifungsrahmens 16 angeordnet.

Der Versteifungsrahmen 16 besteht aus einem ersten und einem zweiten horizontalen Rahmenelement 16A und 16B, sowie aus einem ersten und einem zweiten vertikalen Rahmenelement 16C und 16D. Hierbei ist das vertikale Versteifungselement 18A zwischen dem ersten horizontalen Rahmenelement 16A und dem zweiten horizontalen Rahmenelement 16B angeordnet. Das horizontale Versteifungselement 18B ist zwischen dem vertikalen Versteifungselement 18A und dem zweiten horizontalen Rahmenelement 16B angeordnet. Die Enden des vertikalen Versteifungselementes 18A beziehungsweise des horizontalen Versteifungselementes 18B enden vorzugsweise im Bereich von mechanisch hoch belastbaren Bereichen des Versteifungsrahmens 16.

Figur 1 zeigt ferner, dass das vertikale Versteifungselement 18A einerseits bei etwa einem Drittel der Länge des ersten horizontalen Rahmenelementes 16A endet. Andererseits endet das vertikale Versteifungselement 18A an der Verbindungsstelle zwischen dem ersten vertikalen Rahmenelement 16C mit dem zweiten horizontalen Rahmenelement 16B.

Das horizontale Versteifungselement 18B endet einerseits in etwa auf der Hälfte des vertikalen Versteifungselementes 18A und andererseits in etwa bei 2/3 des zweiten horizontalen Rahmenelementes 16B.

Figur 1 zeigt zudem, dass außerhalb der von den Versteifungselementen 18A und 18B beanspruchten Fläche des flächigen Elementes 12 eine Öffnung 20 angeordnet ist. Durch diese Öffnung 20 ist in vorteilhafter Weise ein Durchladen von Ladegütern möglich. Die in Figur 1 gezeigte rechteckige Ausführung stellt selbstverständlich nur ein Beispiel von verschiedenen Ausführungsformen der Öffnungen 20 dar. Die Ausbildung der Öffnung 20 ist in allen denkbaren geometrischen Formen möglich.

Figur 2 zeigt einen Schnitt A-A durch den Grundkörper 10 der Rückenlehne. Im Schnitt A-A der Figur 2 werden das flächige Element 12, das erste horizontale Rahmenelement 16A, das horizontale Versteifungselement 18B und das zweite horizontale Rahmenelement 16B sichtbar. Figur 2 verdeutlicht somit beispielhaft die Ausführung des ersten horizontalen Rahmenelementes 16A und des horizontalen Versteifungselementes 18B als u-förmiges Profil und die Ausführung des zweiten horizontalen Rahmenelementes 16B als Hohl-Profil. Zudem wird das flächige Element 12 in seiner Blechstärke sichtbar. Die dargestellten Ausführungsformen des Versteifungsrahmens 16 beziehungsweise der Versteifungselemente 18 in Figur 2 sind jedoch nur beispielhaft, denn im Querschnitt betrachtet sind sowohl rohrförmige, u-förmige als auch Hohl-Profile einsetzbar.

Für die Figuren 1 und 2 gilt weiterhin, dass das flächige Element 12, das erste und zweite horizontale Rahmenelement 16A, 16B, das erste und zweite vertikale Rahmenelement 16C, 16D und die Versteifungselemente 18A und 18B aus Leichtbaumaterialien herstellbar sind und stellen- und bereichsweise verschiedene Materialstärken aufweisen können.

In den Figuren 1 und 2 sind die Verbindungen zwischen der Versteifungsstruktur 14 und/oder dem Versteifungsrahmen 16 nicht dargestellt. Es erfolgt eine Fügeverbindung zwischen den einzelnen Elementen der Versteifungsstruktur 14 - dem Versteifungsrahmen 16 und/oder dem mindestens einen Versteifungselement 18 - und dem Flächenelement 12 beispielsweise durch Kleben, durch thermische Einwirkung oder auf andere geeignete Weise.

Dabei gilt, dass die Verbindungen je nach Höhe der zu erwartenden Krafteinwirkung auf den Grundkörper 10 ausgewählt werden. Bei geringeren Belastungen kann gegebenenfalls auf eine Verbindung des mindestens einen Versteifungselementes 18 mit dem flächigen Element 12 verzichtet werden. In diesem Fall ist dann das mindestens eine Versteifungselement 18 nur mit dem Verbindungsrahmen 16 verbunden. Der Verbindungsrahmen 16 ist entsprechend mit dem flächigen Element 12 durch eine Fügeverbindung oder dergleichen verbunden.

Durch die Anordnung der Versteifungsstruktur 14 als Teil des Grundkörpers 10 wird erreicht, dass die kritischen Lastaufnahmepunkte bei angreifenden Zugkräften am Grundkörpers 10 ein ausreichendes Verharrungsvermögen hinsichtlich einer Vorverlagerung in den Kraftfahrzeuginnenraum besitzen.

Trotz der gefundenen gewichtssparenden Bauweise des Grundkörpers 10 bei angenommenen kritischen Lastfällen, ist somit eine erforderliche Steifigkeit des Grundkörpers 10 gewährleistet, so dass ein maximal möglicher Fahrzeuginsassenschutz gewährleistet ist.

### BEZUGSZEICHENLISTE

- 10: Grundkörper
- 12: flächiges Element
- 14: Versteifungsstruktur
- 16: Versteifungsrahmen
- 16A: erstes horizontales Rahmenelement
- 16B: zweites horizontales Rahmenelement
- 16C: erstes vertikales Rahmenelement
- 16D: zweites vertikales Rahmenelement
- 18: Versteifungselement
- 18A: vertikales Versteifungselement
- 18B: horizontales Versteifungselement
- 20: Öffnung

## Patentansprüche

1. Rückenlehne für einen Kraftfahrzeugsitz, wobei die Rückenlehne einen Grundkörper (10) umfasst, der über wenigstens einen Befestigungspunkt starr mit einer Kraftfahrzeugkarosserie verbindbar ist, wobei der Grundkörper (10) ein flächiges Element (12) und mindestens eine mit dem Grundkörper (10) verbundene Versteifungsstruktur (14) umfasst, wobei die Versteifungsstruktur (14) einen Versteifungsrahmen (16) und mindestens ein zwischen den Rahmenelementen (16A, 16B, 16C) des Versteifungsrahmens (16) angeordnetes Versteifungselement (18A, 18B) aufweist, **dadurch gekennzeichnet, dass** die Elemente (16A, 16B, 16C, 16D) des Versteifungsrahmens (16) aus Hohl-Profilen und das mindestens eine Versteifungselement (18A, 18B) aus einem U-Profil gebildet ist, wobei der Versteifungsrahmen (16) und das mindestens eine Versteifungselement (18) mit dem flächigen Element (12) verklebt und/oder durch thermische Einwirkung verbunden ist.

2. Rückenlehne nach Anspruch 1, **dadurch gekennzeichnet, dass** das mindestens eine Versteifungselement (18) innerhalb des Versteifungsrahmens (16) angeordnet ist.

3. Rückenlehne nach Anspruch 1 und 2, **dadurch gekennzeichnet, dass** das mindestens eine Versteifungselement (18) ein vertikales Versteifungselement (18A) und ein horizontales Versteifungselement (18B) umfasst.

4. Rückenlehne nach Anspruch 1, **dadurch gekennzeichnet, dass** der Versteifungsrahmen (16) ein erstes und zweites horizontales Rahmenelement (16A, 16B) und ein erstes und zweites vertikales Rahmenelement (16C, 16D) umfasst.

5. Rückenlehne nach einem der vorhergehenden Ansprüche, **dadurch gekennzeichnet, dass** das vertikale Versteifungselement (18A) zwischen dem ersten horizontalen Rahmenelement (16A) und dem zweiten horizontalen Rahmenelement (16B) angeordnet ist.

6. Rückenlehne nach einem der vorhergehenden Ansprüche, **dadurch gekennzeichnet, dass** das horizontale Versteifungselement (18B) zwischen dem vertikalen Versteifungselement (18A) und dem zweiten horizontalen Rahmenelement (16B) angeordnet ist.

7. Rückenlehne nach einem der vorhergehenden Ansprüche, **dadurch gekennzeichnet, dass** außerhalb der von den Versteifungselementen (18A, 18B) beanspruchten Fläche in dem flächigen Element (12) eine Öffnung (20) anordbar ist, die ein Durchladen von Ladegütern ermöglicht.

8. Rückenlehne nach einem der vorhergehenden Ansprüche, **dadurch gekennzeichnet, dass** die Versteifungselemente (18A, 18B) im Bereich von mechanisch hoch belastbaren Bereichen des Versteifungsrahmens (16) enden.

9. Rückenlehne nach einem der vorhergehenden Ansprüche, **dadurch gekennzeichnet, dass** die Elemente (12, 16A, 16B, 16C, 16D, 18A, 18B) des Grundkörpers (10) aus Leichtbaumaterialien herstellbar sind.

10. Rückenlehne nach einem der vorhergehenden Ansprüche, **dadurch gekennzeichnet, dass** die Elemente (12, 16A, 16B, 16C, 16D, 18A, 18B) des Grundkörpers (10) stellen- und bereichsweise verschiedene Materialstärken aufweisen.

## Claims

1. Back rest for a motor vehicle seat, wherein the back rest comprises a basic body (10) which is connectable rigidly to a motor vehicle body via at least one fastening point, wherein the basic body (10) comprises a flat element (12) and at least one stiffening structure (14) which is connected to the basic body (10), wherein the stiffening structure (14) has a stiffening frame (16) and at least one stiffening element (18A, 18B) which is arranged between the frame elements (16A, 16B, 16C) of the stiffening frame (16), **characterized in that** the elements (16A, 16B, 16C, 16D) of the stiffening frame (16) consist of hollow profiles and the at least one stiffening element (18A, 18B) is formed from a U profile, wherein the stiffening frame (16) and the at least one stiffening element (18) are adhesively bonded to the flat element (12) and/or are connected thereto by thermal action.

2. Back rest according to Claim 1, **characterized in that** the at least one stiffening element (18) is arranged within the stiffening frame (16).

3. Back rest according to Claims 1 and 2, **characterized in that** the at least one stiffening element (18) comprises a vertical stiffening element (18A) and a horizontal stiffening element (18B).

4. Back rest according to Claim 1, **characterized in that** the stiffening frame (16) comprises a first and second horizontal frame element (16A, 16B) and a first and second vertical frame element (16C, 16D).

5. Back rest according to one of the preceding claims, **characterized in that** the vertical stiffening element (18A) is arranged between the first horizontal frame element (16A) and the second horizontal frame element (16B).

6. Back rest according to one of the preceding claims, **characterized in that** the horizontal stiffening element (18B) is arranged between the vertical stiffening element (18A) and the second horizontal frame element (16B).

7. Back rest according to one of the preceding claims, **characterized in that** an opening (20) can be arranged in the flat element (12) outside the area taken by the stiffening elements (18A, 18B), said opening permitting goods to be loaded therethrough.

8. Back rest according to one of the preceding claims, **characterized in that** the stiffening elements (18A, 18B) end in the region of mechanically highly loadable regions of the stiffening frame (16).

9. Back rest according to one of the preceding claims, **characterized in that** the elements (12, 16A, 16B, 16C, 16D, 18A, 18B) of the basic body (10) can be produced from lightweight construction materials.

10. Back rest according to one of the preceding claims, **characterized in that** the elements (12, 16A, 16B, 16C, 16D, 18A, 18B) of the basic body (10) have different material thicknesses in parts and in regions.

## Revendications

1. Dossier pour un siège de véhicule automobile, le dossier comprenant un corps de base (10) pouvant être relié de façon rigide à une carrosserie de véhicule automobile via au moins un point de fixation, le corps de base (10) comprenant un élément plat (12) et au moins une structure de renforcement (14) reliée au corps de base (10), la structure de renforcement (14) comportant un cadre de renforcement (16) et au moins un élément de renforcement (18A, 18B) disposé entre les éléments de cadre (16A, 16B, 16C) du cadre de renforcement (16), **caractérisé en ce que** les éléments (16A, 16B, 16C, 16D) du cadre de renforcement (16) sont formés de profilés creux et que l'au moins un élément de renforcement (18A, 18B) est formé d'un profilé en U, le cadre de renforcement (16) et l'au moins un élément de renforcement (18) étant collés à l'élément plat (12) et/ou reliés par action thermique.

2. Dossier selon la revendication 1, **caractérisé en ce que** l'au moins un élément de renforcement (18) est disposé à l'intérieur du cadre de renforcement (16).

3. Dossier selon la revendication 1 et 2, **caractérisé en ce que** l'au moins un élément de renforcement (18) comprend un élément de renforcement (18A) vertical et un élément de renforcement (18B) horizontal.

4. Dossier selon la revendication 1, **caractérisé en ce que** le cadre de renforcement (16) comprend un premier et un deuxième élément de cadre (16A, 16B) horizontal et un premier et un deuxième élément de cadre (16C, 16D) vertical.

5. Dossier selon l'une quelconque des revendications précédentes, **caractérisé en ce que** l'élément de renforcement (18A) vertical est disposé entre le premier élément de cadre (16A) horizontal et le deuxième élément de cadre (16B) horizontal.

6. Dossier selon l'une quelconque des revendications précédentes, **caractérisé en ce que** l'élément de renforcement (18B) horizontal est disposé entre l'élément de renforcement (18A) vertical et le deuxième élément de cadre (16B) horizontal.

7. Dossier selon l'une quelconque des revendications précédentes, **caractérisé en ce qu'**une ouverture (20) peut être agencée dans l'élément plat (12) en dehors de la surface utilisée par les éléments de renforcement (18A, 18B), cette ouverture permettant de ranger des rangements.

8. Dossier selon l'une quelconque des revendications précédentes, **caractérisé en ce que** les éléments de renforcement (18A, 18B) prennent fin dans la zone des régions à forte sollicitation mécanique du cadre de renforcement (16).

9. Dossier selon l'une quelconque des revendications précédentes, **caractérisé en ce que** les éléments (12, 16A, 16B, 16C, 16D, 18A, 18B) du corps de base (10) peuvent être fabriqués à partir de matériaux légers.

10. Dossier selon l'une quelconque des revendications précédentes, **caractérisé en ce que** les éléments (12, 16A, 16B, 16C, 16D, 18A, 18B) du corps de base (10) comportent des épaisseurs de matériau différentes en fonction des endroits et des zones.
